(19)

Europäisches Patentamt
European Patent Office
Office européen des brevets

(11)  **EP 4 744 939 A1**

(12)  **EUROPEAN PATENT APPLICATION**
published in accordance with Art. 153(4) EPC

(43) Date of publication:
**20.05.2026  Bulletin 2026/21**

(21) Application number: **23946900.0**

(22) Date of filing: **10.10.2023**

(51) International Patent Classification (IPC):
***B60L 9/18*** (2006.01)    ***B60L 15/20*** (2006.01)

(52) Cooperative Patent Classification (CPC):
**B60L 9/18; B60L 15/20**

(86) International application number:
**PCT/IB2023/000581**

(87) International publication number:
**WO 2025/027360 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.07.2023  PCT/IB2023/000395**

(71) Applicants:
• **Nissan Motor Co., Ltd.**
  **Yokohama-shi, Kanagawa 221-0023 (JP)**

• **Renault s.a.s**
  **92100 Boulogne Billancourt (FR)**

(72) Inventor: **TSUDA, Fumiya**
  **Atsugi-shi, Kanagawa 243--0123 (JP)**

(74) Representative: **Grünecker Patent- und Rechtsanwälte PartG mbB Leopoldstraße 4 80802 München (DE)**

(54)  **VEHICULAR BRAKING/DRIVING FORCE CONTROL METHOD AND CONTROL DEVICE**

(57)    In order to control braking/driving force to a front wheel and/or a rear wheel of a vehicle, a vehicular braking/driving force control method: determine whether a cornering force of a tire is in a grip area where the cornering force is proportional to input by a driver or in a non-grip area where the cornering force is not proportional to input by the driver; in the grip area, calculate a target slip angle of the vehicle and control braking/driving force to the front wheel and/or the rear wheel to bring a slip angle generated in the vehicle close to the target slip angle; and in the non-grip area, calculate a target yaw rate of the vehicle and control braking/driving force to the front wheel and/or the rear wheel to bring a yaw rate generated in the vehicle close to the target yaw rate.

FIG. 3

EP 4 744 939 A1

## Description

### Technical Field

The present invention relates to a vehicular braking/driving force control method and a vehicular braking/driving force control device.

### Background Art

PTL 1 described below describes that a direction of a yaw rate generated in a vehicle and a direction of a slip angle of the vehicle (vehicle body) are compared with each other, and when both directions are the same, driving force to front wheels is made large and when both directions are opposite to each other, driving force to rear wheels is made large.

### Citation List

### Patent Literature

PTL 1: JP 2007-302115 A

### Summary of Invention

### Technical Problem

In PTL 1 described above, by comparing the direction of the yaw rate with the direction of the slip angle, whether a turning state of the vehicle is in an oversteer state or an understeer state is determined. The turning state of the vehicle is brought into such states mainly when a cornering force of a tire is in a non-grip area where the cornering force is not proportional to input by a driver. On the other hand, in a grip area where the cornering force of the tire is proportional to input by the driver, the driver is sometimes required to perform corrective steering, and there is still room for improvement in respect of such problems.

An object of the present invention is to provide a vehicular braking/driving force control method and control device capable of reducing corrective steering in a grip area and also improving steering stability at the time of turning in a non-grip area.

### Solution to Problem

One aspect of the present invention: determines whether a cornering force of a tire is in a grip area where the cornering force is proportional to input by a driver or in a non-grip area where the cornering force is not proportional to input by the driver; in the grip area, calculates a target slip angle of the vehicle and controls braking/driving force to a front wheel and/or a rear wheel to bring a slip angle generated in the vehicle close to the target slip angle; and in the non-grip area, calculates a target yaw rate of the vehicle and controls braking/driving force to the front wheel and/or the rear wheel to bring a yaw rate generated in the vehicle close to the target yaw rate.

### Advantageous Effects of Invention

According to the one aspect of the present invention, in the grip area, appropriately setting a target slip angle of a vehicle enables corrective steering to be reduced, and in the non-grip area, since a yaw rate of the vehicle comes close to a target yaw rate, steering stability at the time of turning can be improved.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a plan view illustrative of a schematic configuration of an example of a vehicular braking/driving device of an embodiment;

FIG. 2 is a block diagram of a functional configuration example of a controller;

FIG. 3 is a flowchart illustrative of an example of calculation processing executed in a front/rear motor torque correction value calculation unit;

FIG. 4 is a flowchart of a subprogram executed in the calculation processing in FIG. 3;

FIG. 5 is a flowchart of another subprogram executed in the calculation processing in FIG. 3;

FIG. 6 is an explanatory diagram of a target slip angle;

FIG. 7 is a flowchart of still another subprogram executed in the calculation processing in FIG. 3;

FIG. 8 is an explanatory diagram of a target yaw rate;

FIG. 9 is a flowchart illustrative of another example of the calculation processing executed in the front/rear motor torque correction value calculation unit;

FIG. 10 is an explanatory diagram of an effect exerted by calculation processing in FIGS. 3 and 9; and

FIG. 11 is another explanatory diagram of the effect exerted by the calculation processing in FIGS. 3 and 9.

Description of Embodiments

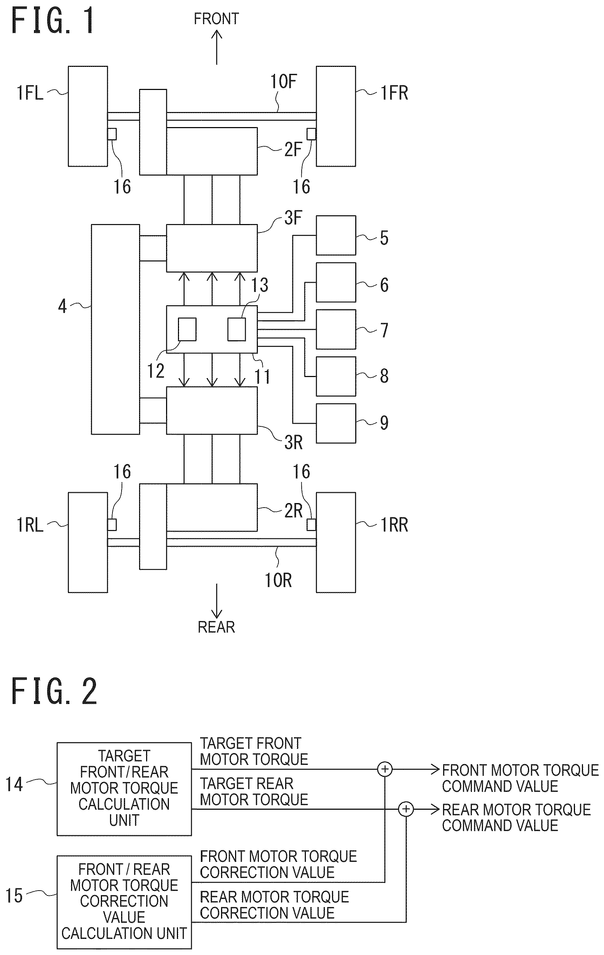

A braking/driving device of an embodiment illustrated in FIG. 1 includes a front motor 2F that drives front wheels 1FL and 1FR (front axle 10F) and a rear motor 2R that drives rear wheels 1RL and 1RR (rear axle 10R). Both the front motor 2F and the rear motor 2R are three-phase AC electric motors. Therefore, a vehicle in this embodiment is an electric four-wheel drive vehicle that drives each of the front wheels 1FL and 1FR and the rear wheels 1RL and 1RR with a separate electric motor. The vehicle is equipped with a driving battery 4 that supplies power to the front motor 2F and the rear motor 2R. The battery 4 is a DC storage battery that enables high-voltage high-current power to be generated. To convert DC power from the battery 4 to three-phase AC power and apply the AC power to the front motor 2F and the rear motor 2R, a front inverter 3F and a rear inverter 3R are provided for the front motor 2F and the rear motor 2R, respectively. The front inverter 3F and the rear inverter 3R also have a function of causing the front motor 2F and the rear motor 2R to perform regenerative operation to charge the battery 4, respectively. When the front motor 2F and the rear motor 2R perform regenerative operation, braking forces (braking torque) are provided to the front wheels 1FL and 1FR and the rear wheels 2RL and 2RR, respectively. The front inverter 3F and the rear inverter 3R are capable of adjusting operating states of the front motor 2F and the rear motor 2R, such as driving torque and braking torque, by adjusting power applied to or regenerative power from the front motor 2F and the rear motor 2R, respectively. The driving torque or the braking torque of the front motor 2F and rear motor 2R adjusted by the front inverter 3F and rear inverter 3R, respectively can be controlled in accordance with a command signal from a controller. That is, the front motor 2F and the rear motor 2R are capable of adjusting driving force or braking force to the front wheels 1FL and 1FR and the rear wheels 1RL and 1RR according to the operating states, respectively. Note that driving force and braking force are collectively referred to as braking/driving force.
The vehicle is provided with an accelerator opening sensor 5 to detect the amount of pressing on an accelerator pedal and a brake pressing force sensor 6 to detect the amount of pressing (pressing force) on a brake pedal. The vehicle is also provided with a steering angle sensor 7 to detect an operation amount (including an operation direction) of a steering wheel. In addition, the vehicle is also provided with a yaw rate sensor 8 to detect a yaw rate generated in the vehicle and wheel speed sensors 16 to detect rotational speeds (wheel speeds) of the front wheels 1FL and 1FR and the rear wheels 1RL and 1RR. Further, the vehicle is provided with a travel characteristic selection switch 9 that enables selection of a traveling state of the vehicle, for example, travel characteristics when the vehicle is turning. The travel characteristic selection switch 9 allows selection of various modes, such as a sport mode in which the vehicle can exert quick turning characteristics on a winding road or the like, an economy mode that suppresses power consumption from the battery 4, and a snow mode that provides stable travel characteristics on a slippery road surface like a snow road. For example, in the sport mode, regarding the front motor 2F and the rear motor 2R, responsiveness of the driving torque and the braking torque is increased and at the same time the regenerative operation is emphasized. In the economy mode, regarding the front motor 2F and the rear motor 2R, the responsiveness of the driving torque is suppressed and at the same time the regenerative operation is emphasized. In the snow mode, regarding the front motor 2F and the rear motor 2R, the driving torque and the braking torque are suppressed and at the same time the regenerative operation is slightly emphasized.
A controller 11 is an electronic control unit (ECU) that controls operating states of the front motor 2F and the rear motor 2R, in particular the braking/driving forces (braking/driving torque) provided to the front wheels 1FL and 1FR and the rear wheels 1RL and 1RR. Therefore, the controller 11 includes a computer system that has advanced calculation processing capability. The computer system, as with well-known computer systems, includes a processor 12 that exerts advanced calculation processing capability and a storage device 13 that stores information about programs and sensor signals. The processor 12 is constituted by, for example, a central processing unit (CPU) or a micro-processing unit (MPU). The storage device 13 includes a semiconductor storage device, a magnetic storage device, and an optical storage device. The storage device 13 may further include a memory that is used as registers, a cache memory, and a main storage device. Calculation processing executed by the controller 11 is achieved by, for example, the processor 12 executing computer programs stored in the storage device 13 of the controller 11. In addition, the calculation processing executed by the controller 11 may be executed by a functional logic circuit that is implemented in a general-purpose semiconductor integrated circuit. For example, the controller 11 may include a programmable logic device, such as a field-programmable gate array, and the like. Note that although in the present embodiment, the following logic is configured to be executed by the controller 11, the controller 11 may, for example, be configured to only control the operating states of the front motor 2F and the rear motor 2R, and the following logic may be executed by a separate controller.

FIG. 2 illustrates logic of calculation processing that is executed by the controller 11 and that calculates command values of front motor torque and rear motor torque that the front motor 2F and the rear motor 2R are commanded to generate, respectively and outputs command signals. In the calculation processing, while target front motor torque and target rear motor torque are calculated by a target front/rear motor torque calculation unit 14, a front motor torque correction value and a rear motor torque correction value are calculated by a front/rear motor torque correction value calculation unit 15. A value obtained by adding the front motor torque correction value to the target front motor torque is output as a front motor torque command value, and a value obtained by adding the rear motor torque correction value to the target rear motor torque is also output as a rear motor torque command value. The front motor torque correction value and the rear motor torque correction value are set depending on whether a state of friction force between the vehicle (tire) and a road surface is in a grip area or a non-grip area. The term "grip" means "to hold firmly" like the meaning of the English word "grip", and in light of the above description, the term "grip" means that a tire is holding the road surface firmly. Therefore, in the non-grip area, the tire (vehicle) tends to skid easily. In general, in the grip area, a cornering force of a tire is regarded to be proportional to a slip angle of the vehicle (in an area where the slip angle is small), and a proportionality coefficient in the proportionality relationship is referred to as cornering power. The slip angle of the vehicle depends on a turning angle of the front wheels (steering angle), traveling speed of the vehicle, and an acceleration/deceleration state of the vehicle, and therefore, the cornering force of a tire in the grip area is proportional to (operation) input by a driver. Meanwhile, in the non-grip area, the cornering force of a tire is not proportional to input by the driver.

As is conjectured from the above description, the target front motor torque and the target rear motor torque are reference values to which the front motor torque correction value and the rear motor torque correction value corresponding to whether the friction force between a tire and the road surface is in the grip area or the non-grip area are added, respectively. In the present embodiment, a driver-demanded braking/driving force demanded by the driver is calculated based on the amount of pressing on the accelerator pedal detected by the accelerator opening sensor 5 and the amount of pressing (pressing force) on the brake pedal detected by the brake pressing force sensor 6. At the time of the calculation, filtering processing can be applied as appropriate. To the driving force of the driver-demanded braking/driving force, driving torque obtained by causing the front motor 2F and the rear motor 2R to perform powering operation corresponds. Likewise, to the braking force of the driver-demanded braking/driving force, braking torque obtained by causing the front motor 2F and the rear motor 2R to perform regenerative operation corresponds. When the driver-demanded braking/-driving force is calculated and set at a predetermined sampling period, the amount of increase or decrease from a previously set value is adjusted depending on a travel mode selected by the travel characteristic selection switch 9. The driver-demanded braking/driving force calculated and set in this way is, for example, allocated to the front axle 10F and the rear axle 10R with a preset braking/driving force allocation ratio between the front and rear wheels, and target front motor torque of the front motor 2F to achieve front axle braking/driving force and target rear motor torque of the rear motor 2R to achieve rear axle braking/driving force are calculated and set. The braking/driving force allocation ratio between the front and rear wheels can be set to, for example, 50:50 in such a way that the driver-demanded braking/driving force is equally allocated to the front axle 10F and the rear axle 10R. In addition, as in another aspect of the control, which will be described later, it is possible to cause the driver-demanded braking/driving force to be allocated only to the rear wheels (or the front wheels) when the steering wheel is not steered and the driver-demanded braking/driving force to be allocated to both the front wheels and the rear wheels when the steering wheel is steered. Note that when a sum of braking torque values obtained by causing both motors to perform regenerative operation is less than the driver-demanded braking/driving force, a hydraulic braking device or an electric braking device may be configured to compensate for the deficiency in accordance with not-illustrated separate calculation processing.

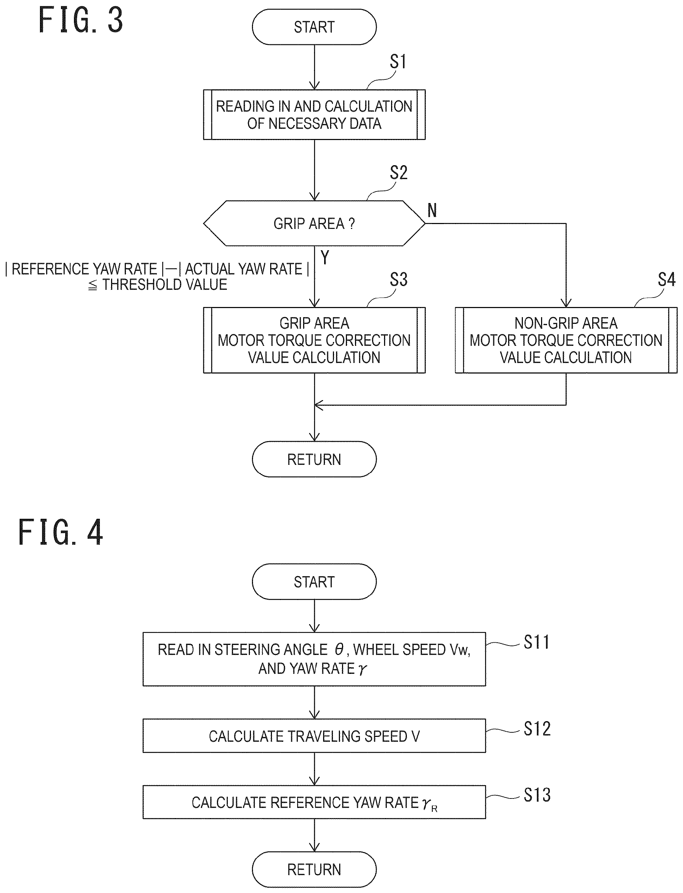

Next, an example of the calculation processing executed within the controller 11 as the front/rear motor torque correction value calculation unit 15 will be described using a flowchart in FIG. 3. The calculation processing is, for example, executed at a predetermined sampling period, and first, in step S1, necessary data are read in and calculated in accordance with separate calculation processing, which will be described later. Next, the process proceeds to step S2, whether or not the friction force between the vehicle (tire) and the road surface is in the grip area is determined, and when the friction force is in the grip area, the process proceeds to step S3 and otherwise, that is, when the friction force is in the non-grip area, the process proceeds to step S4. The determination of whether or not the friction force is in the grip area in this example is performed by determining whether or not a difference obtained by subtracting an absolute value of a yaw rate detected by the yaw rate sensor 8 (actual yaw rate) from an absolute value of a reference yaw rate, which will be described later, is less than or equal to a threshold value (for example, 3 deg/sec), and when the difference is less than or equal to the threshold value, the friction force is determined to be in the grip area and otherwise, the friction force is determined to be in the non-grip area. On this occasion, it may be configured such that when the snow mode is selected by the travel characteristic selection switch, the threshold value is made small, and making the threshold value small enables the friction force to be determined to be in the non-grip area at an earlier timing. Note that as for determination of whether the yaw rate (the actual yaw rate and the target yaw rate) is positive or negative will be described in a later stage. In step S3, the motor torque (front and rear motor torque) correction values in the grip area are calculated in accordance with separate calculation processing, which will be described later, and subsequently the process returns to the original process. In step S4, the motor torque (front and rear motor torque) correction values in the non-grip area are calculated in accordance with separate operation processing, which will be described later, and subsequently the process returns to the original process.

Next, a subprogram executed in step S1 in the calculation processing in FIG. 3 will be described using a flowchart in FIG. 4. In the calculation processing, first, in step S11, a steering angle $\theta$ of the steering wheel detected by the steering angle sensor 7, and wheel speeds Vw of the front wheels 1FL and 1FR and the rear wheels 1RL and 1RR detected by the wheel speed sensors 16 are read in. Next, the process proceeds to step S12, and traveling speed V of the vehicle is calculated using the wheel speeds Vw read in in step S11. The traveling speed V may, for example, be calculated from an average value of the wheel speeds Vw of all the wheels or calculated from an average value of remaining wheel speeds Vw with the exception of a wheel speed Vw that deviates from the other wheel speeds Vw, that is, a wheel speed Vw with a large so-called slip ratio. Another arbitrary calculation method may also be applicable. Next, the process proceeds to step S13, a reference yaw rate $\gamma_R$ is calculated in accordance with the formula 1 below, and subsequently the process returns to the original process. In the formula 1, $\delta_F$ denotes a front wheel turning angle, and the front wheel turning angle is generally in a proportional relationship with a steering angle $\theta$. In addition, m is vehicle mass, I is yaw inertia radius, L is a wheelbase, $L_F$ is distance from the center of gravity of the vehicle to the front axle 10F, $L_R$ is distance from the center of gravity of the vehicle to the rear axle 10R, $K_F$ is equivalent cornering power of the front wheels 1FL and 1FR, and $K_R$ is equivalent cornering power of the rear wheels 1RL and 1RR. In addition, positivity or negativity of the reference yaw rate $\gamma_R$ is given in accordance with a direction of the yaw rate $\gamma$, and is given by differentiating a sign of the front wheel turning angle $\delta_F$ in the formula 1 depending on whether the steering wheel is turned counterclockwise or clockwise. When a positive or negative sign is assigned to the actual yaw rate $\gamma$ detected by the yaw rate sensor 8 depending on the direction of the yaw rate that is generated in the vehicle, the sign of the reference yaw rate $\gamma_R$, that is, the sign of the front wheel turning angle $\delta_F$, is only required to be assigned in such a way as to match the sign of the actual yaw rate $\gamma$.

[Math 1]

$$\gamma_R(s) = G_\gamma \cdot \frac{1+T_\gamma s}{1+\dfrac{2\zeta s}{\omega n}+\dfrac{s^2}{\omega n^2}} \cdot \delta_F(s) \qquad \cdots (1)$$

$$G_\gamma = \frac{1}{1+AV^2} \cdot \frac{V}{L} \qquad \cdots (1\text{-}1)$$

$$T_\gamma = \frac{mL_F V}{2LK_R} \qquad \cdots (1\text{-}2)$$

$$A = -\frac{m}{2L^2} \cdot \frac{L_F K_F - L_R K_R}{K_F K_R} \qquad \cdots (1\text{-}3)$$

$$\zeta = \frac{m(L_F^2 K_F + L_R^2 K_R) + I(K_F + K_R)}{L\sqrt{mIK_F K_R(1+AV^2)}} \qquad \cdots (1\text{-}4)$$

$$\omega_n = \frac{2L}{V}\sqrt{\frac{K_F K_R}{mI}}\sqrt{1+AV^2} \qquad \cdots (1\text{-}5)$$

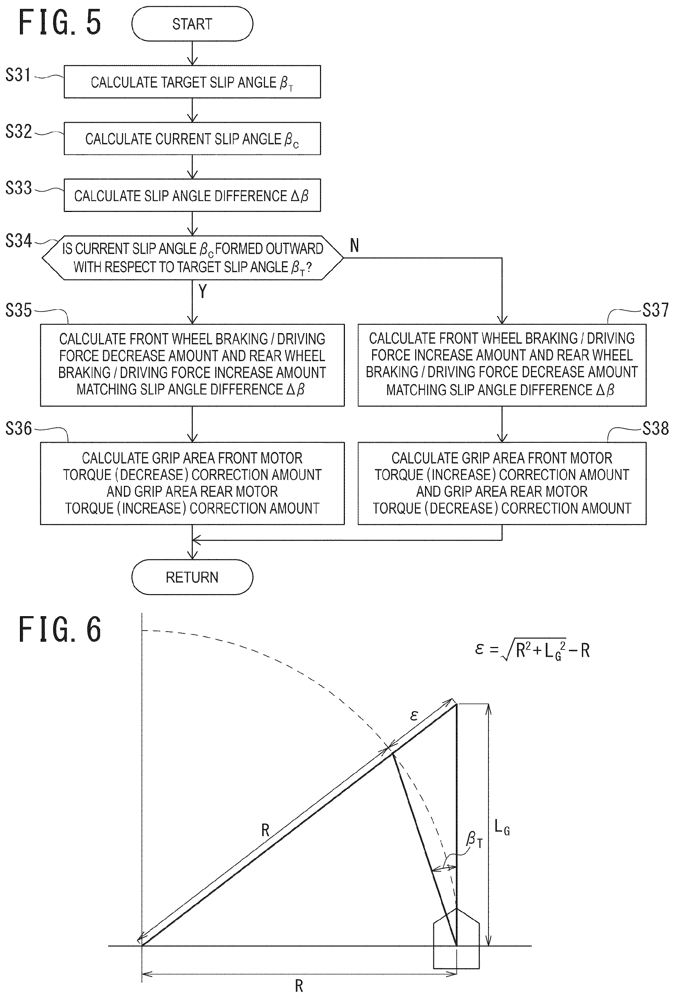

Next, a subprogram executed in step S3 in the calculation processing in FIG. 3 will be described using a flowchart in FIG. 5. In this calculation processing, first, in step S31, a target slip angle $\beta_T$ is calculated. The target slip angle $\beta_T$ is calculated and set as described below. For example, when the vehicle is traveling while making a steady circular turn in the grip area as illustrated by a dashed line in FIG. 6, the driver gazes at a position ahead of the vehicle, and distance to the position at which the driver gazes is referred to as forward gaze distance $L_G$. The forward gaze distance $L_G$ is expressed as a product of the traveling speed V of the vehicle and forward gaze time t, and the forward gaze time t is defined as the amount of time in which the driver can modify a traveling direction (traveling position) of the vehicle and is generally 1 to 3 seconds. When radius of a steady circle along which the vehicle performs turning traveling is denoted by R, since the friction force is in the grip area, R=V/y holds and a deviation amount $\varepsilon$ from a turning trajectory to the forward gaze position is obtained by $\varepsilon=(R^2+L_G^2)^{1/2}-R$. When an angle formed by bringing the forward gaze position back to a position on the turning trajectory (that is, the steady circle) is referred to as a target slip angle $\beta_T$, since $\beta_T$ is sufficiently small, $L_G\cdot\sin\beta_T\approx\varepsilon$ holds and $\beta_T$ is further expressed by the formula 2 below. Note that a sign of the target slip angle $\beta_T$ is caused to match the sign of the front wheel turning angle $\delta_F$.
[Math 2]

$$\beta_T = \frac{\sqrt{R^2+L_G^2}}{L_G} - \frac{R}{L_G} \qquad \cdots (2)$$

Next, the process proceeds to step S32, and a current slip angle $\beta_C$ is calculated in accordance with the formula 3 below. As described before, when a positive or negative sign is assigned to the front wheel turning angle $\delta_F$, a sign is also assigned to the current slip angle $\beta_C$. Next, the process proceeds to step S33, and a slip angle difference $\Delta\beta$ is calculated by subtracting the current slip angle $\beta_C$ from the target slip angle $\beta_T$. Next, the process proceeds to step S34, whether the current slip angle $\beta_C$ is formed outward with respect to the target slip angle $\beta_T$ or not (inward), and when the current slip

angle $\beta_C$ is formed outward, the process proceeds to step S35 and otherwise, that is, when the current slip angle $\beta_C$ is formed inward, the process proceeds to step S37. The current slip angle $\beta_C$ being formed outward with respect to the target slip angle $\beta_T$ can be determined by a value obtained by subtracting an absolute value of the current slip angle $\beta_C$ from an absolute value of the target slip angle $\beta_T$ being a positive value. In step S35, since the current slip angle $\beta_C$ is formed outward with respect to the target slip angle $\beta_T$, a front wheel braking/driving force decrease amount and a rear wheel braking/driving force increase amount matching the slip angle difference $\Delta\beta$ are calculated. The front wheel braking/driving force decrease amount and the rear wheel braking/driving force increase amount are only required to be set in accordance with a so-called friction circle theory. Next, the process proceeds to step S36, a grip area front wheel motor torque (decrease) correction amount matching the front wheel braking/driving force decrease amount is calculated and a grip area rear wheel motor torque (increase) correction amount matching the rear wheel braking/driving force increase amount is also calculated, and subsequently the process returns to the original process. In addition, in step S37, since the current slip angle $\beta_C$ is formed inward with respect to the target slip angle $\beta_T$, a front wheel braking/driving force increase amount and a rear wheel braking/driving force decrease amount matching the slip angle difference $\Delta\beta$ are calculated. The front wheel braking/driving force increase amount and the rear wheel braking/driving force decrease amount are also set in accordance with the friction circle theory. Next, the process proceeds to step S38, a grip area front wheel motor torque (increase) correction amount matching the front wheel braking/driving force increase amount is calculated and a grip area rear wheel motor torque (decrease) correction amount matching the rear wheel braking/driving force decrease amount is also calculated, and subsequently the process returns to the original process.

[Math 3]

$$\beta_C(s) = G_\beta \cdot \frac{1 + T_\beta s}{1 + \dfrac{2\zeta s}{\omega n} + \dfrac{s^2}{\omega n^2}} \cdot \delta_F(s) \qquad \cdots (3)$$

$$G_\beta = \frac{1 - \dfrac{mL_F}{2LL_R K_R} V^2}{1 + AV^2} \cdot \frac{L_R}{L} \qquad \cdots (3\text{-}1)$$

$$T_\beta = \frac{lV}{2LL_R K_R} \cdot \frac{1}{1 - \dfrac{mL_F}{2LL_R K_R} V^2} \qquad \cdots (3\text{-}2)$$

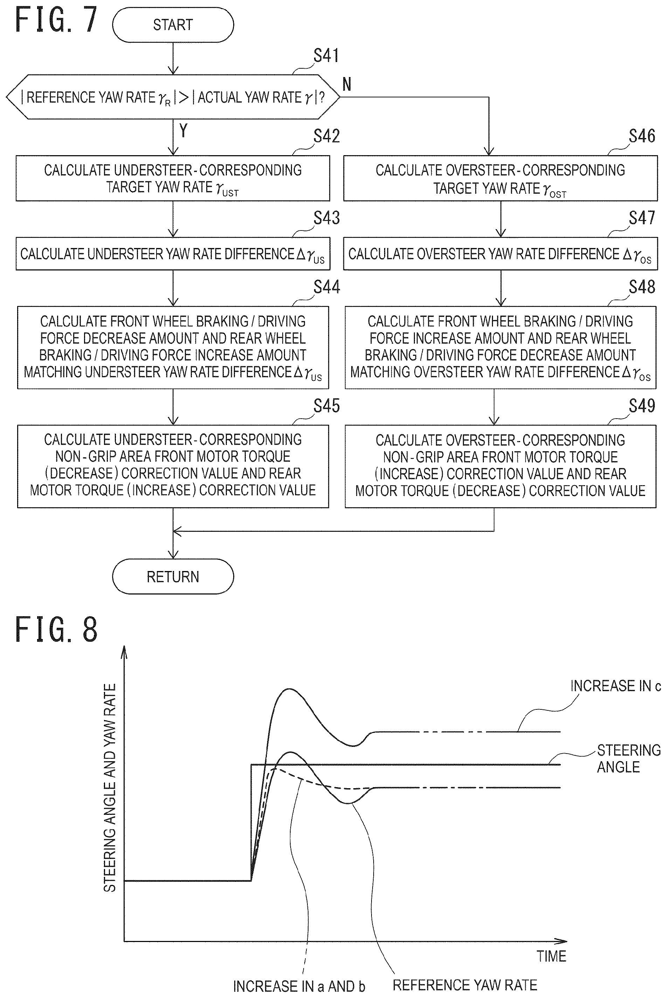

Next, a subprogram executed in step S4 in the calculation processing in FIG. 3 will be described using a flowchart in FIG. 7. In the calculation processing, first, in step S41, whether or not an absolute value of the reference yaw rate $\gamma_R$ is greater than an absolute value of the actual yaw rate $\gamma$, and when the absolute value of the reference yaw rate $\gamma_R$ is greater than the absolute value of the actual yaw rate $\gamma$, the vehicle is determined to be in an understeer state and the process proceeds to step S42, and otherwise, the vehicle is determined to be in an oversteer state and the process proceeds to step S46. The determination may be made in such a manner that in a case where positive or negative signs are assigned to the reference yaw rate $\gamma_R$ and the actual yaw rate $\gamma$, the vehicle is determined to be in the understeer state when the signs of the reference yaw rate $\gamma_R$ and the actual yaw rate $\gamma$ are the same and in the oversteer state when the signs are different. In step S42, an understeer-corresponding target yaw rate $\gamma_{UST}$ is calculated in accordance with the following formula 4. The formula 4 will be described in a later stage. Next, the process proceeds to step S43, and an understeer yaw rate difference $\Delta\gamma_{US}$ is calculated by subtracting the actual yaw rate $\gamma$ from the understeer-corresponding target yaw rate $\gamma_{UST}$. Next, the process proceeds to step S44, and the front wheel braking/driving force decrease amount and the rear wheel braking/-driving force increase amount matching the understeer yaw rate difference $\Delta\gamma_{US}$ are calculated. The front wheel braking/driving force decrease amount and the rear wheel braking/driving force increase amount are set in accordance with the friction circle theory. Next, the process proceeds to step S45, an understeer-corresponding non-grip area front wheel motor torque (decrease) correction amount matching the front wheel braking/driving force decrease amount is calculated and an understeer-corresponding non-grip area rear wheel motor torque (increase) correction amount matching the rear wheel braking/driving force increase amount is also calculated, and subsequently the process returns to the original process. In step S46, an oversteer-corresponding target yaw rate $\gamma_{OST}$ is calculated in accordance with the formula 4 below. Details will be described later. Next, the process proceeds to step S47, and an oversteer yaw rate difference $\Delta\gamma_{OS}$ is calculated by subtracting the actual yaw rate $\gamma$ from the oversteer-corresponding target yaw rate $\gamma_{OST}$. Next, the process proceeds to step S48, and the front wheel braking/driving force increase amount and the rear wheel braking/driving force decrease amount matching the oversteer yaw rate difference $\Delta\gamma_{OS}$ are calculated. The front wheel braking/driving force increase amount and the rear wheel braking/driving force decrease amount are also set in accordance with the friction circle theory. Next, the process proceeds to step S49, an oversteer-corresponding non-grip area front wheel motor torque (increase) correction amount matching the front wheel braking/driving force increase amount is calculated and an oversteer-corresponding non-grip area rear wheel motor torque (decrease) correction amount matching the rear wheel braking/driving force decrease amount is also calculated, and subsequently the process returns to the original process.

[Math 4]

$$\gamma_T(s) = cG_\gamma \cdot \frac{1 + aT_\gamma s}{1 + \dfrac{2b\zeta s}{\omega n} + \dfrac{s^2}{\omega n^2}} \cdot \delta_F(s) \qquad \cdot \cdot \cdot (4)$$

In the formula 4, a coefficient c to adjust gain and coefficients a and b to adjust responsiveness are added to the formula 1 for calculating the reference yaw rate $\gamma_R$. For example, when the reference yaw rate $\gamma_R$, which is calculated by the formula 1, changes over time with respect to the steering angle $\theta$ as illustrated in FIG. 8, the target yaw rate $\gamma_T$ can be made large by increasing the gain adjustment coefficient c. Meanwhile, in this example, the responsiveness adjustment coefficients a and b are set large at the same time. Although when only a rapid responsiveness is simply to be achieved, it is only necessary to set the coefficient a in the numerator larger, doing so causes the target yaw rate $\gamma_T$ to overshoot and, at the same time, convergence to deteriorate. In order to prevent such a problem, also making the coefficient b in the denominator larger enables an overshoot to be suppressed and the convergence to be also improved, as illustrated in FIG. 8. Since regarding a turning state of the vehicle, it is necessary to eliminate an oversteer state more quickly than an understeer state, the coefficients a to c are set larger in the oversteer state than in the understeer state. On this occasion, the turning state of the vehicle differs depending on the acceleration/deceleration state. That is, since while the vehicle is accelerating, a rear wheel load increases whereas a front wheel load decreases, an understeer tendency increases and an oversteer tendency decreases. Accordingly, at the time of acceleration, the understeer-corresponding target yaw rate $\gamma_{UST}$ is set large and the oversteer-corresponding target yaw rate $\gamma_{OST}$ is set small. In contrast, since while the vehicle is decelerating, the rear wheel load decreases whereas the front wheel load increases, the understeer tendency decreases and the oversteer tendency increases. Accordingly, at the time of deceleration, the understeer-corresponding target yaw rate $\gamma_{UST}$ is set small and the oversteer-corresponding target yaw rate $\gamma_{OST}$ is set large. On this occasion, since a degree of non-grip state (degree indicating to what extent the tire does not grip the road surface) increases in proportion to, for example, magnitude of difference (an absolute value of the yaw rate difference $\Delta\gamma$) between (an absolute value of) the target yaw rate and (the absolute value of) the actual yaw rate, the amounts of change in the understeer-corresponding target yaw rate $\gamma_{UST}$ and the oversteer-corresponding target yaw rate $\gamma_{OST}$ may be configured to be set according to the degree of non-grip state. Note that only one of the gain and the responsiveness in the target yaw rate $\gamma_T$ may be configured to be adjusted. Specifically, the target yaw rate $\gamma_T$ is set by adjusting the gain adjustment coefficient c according to the acceleration/deceleration state and the degree of non-grip state.

According to the calculation processing in FIG. 3, whether the friction force between the vehicle (tire) and the road surface is in the grip area or the non-grip area is determined, and when the friction force is in the non-grip area, the front motor torque and the rear motor torque, that is, the front wheel braking/driving force and the rear wheel braking/driving force, are controlled in such a way that the target yaw rate $\gamma_T$ matching the traveling speed V and the front wheel turning angle $\delta_F$ ($\propto$ the steering angle $\theta$) of the vehicle is achieved. Since in the non-grip area, the turning state of the vehicle is easily brought into the understeer state or the oversteer state, such turning states are corrected or caused to subside and come close to a neutral steer state. Since the target yaw rate $\gamma_T$ has the gain set larger or the responsiveness set more rapid than the reference yaw rate $\gamma_R$ in the grip area, the understeer state or the oversteer state is rapidly corrected or caused to subside accordingly. Further, since the target yaw rate $\gamma_{OST}$ when the vehicle is in the oversteer state has the gain set larger or the responsiveness set more rapid than the target yaw rate $\gamma_{UST}$ when the vehicle is in the understeer state, the oversteer state is more rapidly corrected or caused to subside. Furthermore, when the target yaw rates $\gamma_T$ are adjusted according to the acceleration/deceleration state of the vehicle, the understeer state and the oversteer state of the vehicle can be more accurately caused to subside to the neutral steer state. On the other hand, in the grip area, a slip angle when the vehicle position at the forward gaze position is caused to coincide with a position on the turning trajectory is set as a target slip angle, and the front motor torque and the rear motor torque, that is, the front wheel braking/driving force and the rear wheel braking/driving force, are controlled in such a way as to achieve the target slip angle. In the grip area, although the vehicle is supposed to travel along a turning trajectory matching the traveling speed V and the steering angle $\theta$ ($\propto$ the front wheel turning angle $\delta_F$), as a general characteristic of a vehicle, the actual slip angle $\beta$ generated in the vehicle changes according to the traveling speed, as will be described in a later stage. Although due to the change in the actual slip angle $\beta$, the driver performs corrective steering to correct a vehicle trajectory, since in the present embodiment, the front wheel braking/-driving force and the rear wheel braking/driving force are controlled in such a way that the current slip angle $\beta_C$ coincides with the target slip angle $\beta_T$, such corrective steering becomes unnecessary or almost unnecessary.

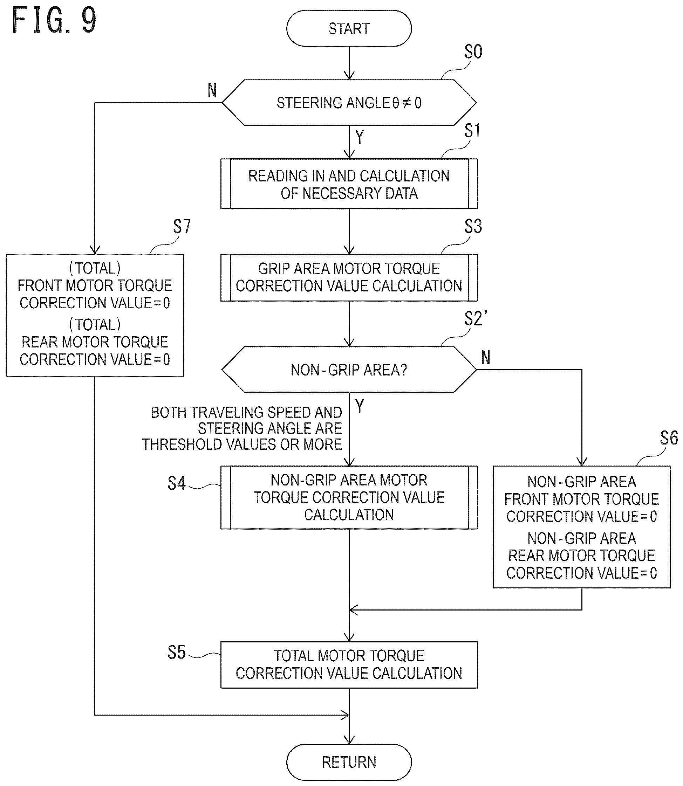

Next, another aspect of the control performed by the vehicular braking/driving force control device of the embodiment will be described using a flowchart in FIG. 9. The flowchart in FIG.9 replaces the flowchart in FIG.3, and the process in the flowchart is, for example, likewise executed at a predetermined sampling period. The calculation processing includes steps that are the same as those in the calculation processing in FIG. 3, and to avoid redundant description, the same reference signs are assigned to such steps. Note that, in association with the assignment of reference signs in such a manner, step numbers are not in order. In addition, in the present aspect of the control, as described before, the target front motor torque and the target rear motor torque are calculated and set in such a manner that when the steering wheel is not being steered, the driver-demanded braking/driving force is allocated only to the rear wheels (or the front wheels) and when the steering wheel is being steered, the driver-demanded braking/driving force is allocated to the front wheels and the rear wheels. In this case, the braking/driving force can be arbitrarily allocated to the front and rear wheels.

In the calculation processing in FIG. 9, first, in step S0, whether or not the steering angle $\theta$ is not 0 is determined, and when the steering angle $\theta$ is not 0, the process proceeds to step S1, and otherwise, that is, when the steering angle $\theta$ is 0, the process proceeds to step S7. In the determination of the steering angle $\theta$, a dead zone where the steering wheel is determined not to be steered regardless of an actual steering angle may be provided in a vicinity of a position at which the steering wheel is in a neutral state. In step S1, as with the calculation processing in FIG. 3, the subprogram in FIG. 4 is executed and necessary data are thereby read in and calculated. Next, the process proceeds to step S3 and, as with the calculation processing in FIG. 3, the subprogram in FIG. 5 is executed and grip area motor torque correction values are calculated. Next, the process proceeds to step S2', whether or not the friction force between the vehicle (tire) and the road surface is in the non-grip area is determined, and when the friction force is in the non-grip area, the process proceeds to step S4 and otherwise, that is, when the friction force is in the grip area, the process proceeds to step S6. The determination of whether or not the friction force is in the non-grip area in this example is made by setting threshold values for the traveling speed V and the steering angle $\theta$ ($\propto$ the front wheel turning angle $\delta_F$) of the vehicle and determining whether or not both the traveling speed V and the steering angle $\theta$ are greater than or equal to the threshold values, and when both the traveling speed V and the steering angle $\theta$ are greater than or equal to the threshold values, it is determined that the friction force is in the non-grip area. This is because lateral acceleration occurring in the vehicle that is calculated using the traveling speed V and the front wheel turning angle $\delta_F$ ($\propto$ the steering angle $\theta$) has a saturation point corresponding to a friction force between the vehicle (tire) and the road surface and it is considered that when, for example, a calculated lateral acceleration is 0.6 G or more, the friction force is in the non-grip area. Therefore, threshold values corresponding to the saturation point of the lateral acceleration are set for the traveling speed V and the steering angle $\theta$, and the friction force is determined to be in the non-grip area when both the traveling speed V and the steering angle $\theta$ are greater than or equal to the threshold values. Note that when the snow mode is selected by the travel characteristic selection switch, setting the threshold values to be set for the traveling speed V and the steering angle $\theta$ to values corresponding to a lateral acceleration of 0.4 G causes the friction force to be determined to be in the non-grip area at an earlier timing. In step S4, as with the calculation processing in FIG. 3, a subprogram in FIG. 7 is executed and non-grip area motor torque correction values are calculated, and subsequently the process proceeds to step S5. On the other hand, in step S6, the front motor torque correction value and the rear motor torque correction value in the non-grip area are both set to 0 and subsequently the process proceeds to step S5. In step S5, total motor torque correction values are calculated by adding the grip area motor torque correction values and the non-grip area motor torque correction values and subsequently the process returns to the original process. On the other hand, in step S7, a (total) front motor torque correction value and rear motor torque correction value are both set to 0 and subsequently the process returns to the original process.

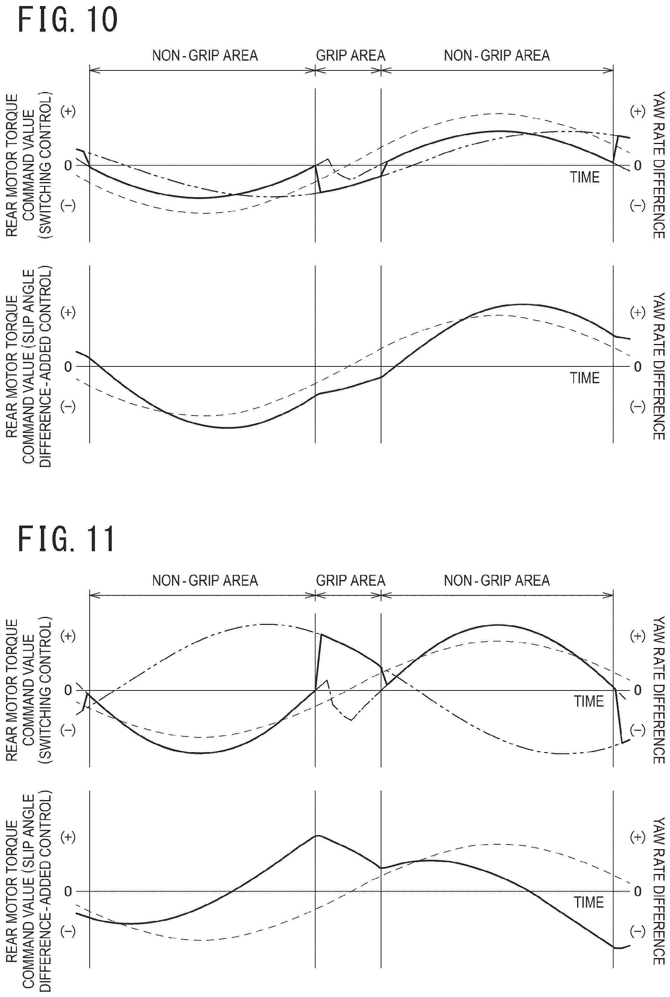

According to the calculation processing in FIG. 9, even in the non-grip area, the target slip angle $\beta_T$ is set, a grip area (more accurately, a non-grip area) front motor torque correction value and rear motor torque correction value that cause the current slip angle $\beta_C$ to coincide with the target slip angle $\beta_T$ are calculated, the slip angle-corresponding motor torque correction values and yaw rate-corresponding motor torque correction values are added to each other and the total motor torque correction value is thereby calculated and set, and target motor torque is corrected with the total motor torque correction values. Each of FIGS. 10 and 11 illustrates simulation results of rear motor torque command values that are calculated through the calculation processing in FIG.2 including correction with rear motor torque correction values set in the calculation processing in FIG.3 and the calculation processing in FIG.7. An upper half part and a lower half part of each drawing illustrate the rear motor torque command value corrected using the rear motor torque correction value that is calculated and set in the calculation processing in FIG. 3 (switching control) and the rear motor torque command value corrected using the (total) rear motor torque correction value that is calculated and set in FIG. 7 (slip angle difference-added control), respectively. Each of dashed lines indicates a yaw rate difference $\Delta\gamma$ between the target yaw rate $\gamma_T$ and the actual yaw rate $\gamma$. In this simulation, it is assumed that the friction force between the vehicle (tire) and the road surface changes over time from the grip area to the non-grip area, to the grip area, to the non-grip area, and to the grip area in this order, the turning direction of the vehicle is switched in the intermediate grip area, and the vehicle is brought into the oversteer state in both non-grip area. In each drawing, a solid line indicates the rear motor torque command value, and in the switching control, a dashed-dotted line indicates the yaw rate-corresponding rear motor torque command value and a dashed-two-dotted line indicates the slip angle-corresponding rear motor torque command value.

In this simulation, changes in the rear motor torque command value when the friction force between the vehicle (tire) and the road surface transitions from the grip area to the non-grip area and from the non-grip area to the grip area are indicated. That is, since the target slip angle $\beta_T$ and the target yaw rate $\gamma_T$ are not involved with each other, the rear motor torque command value changes in a stepwise manner at the time of the transitions in the rear motor torque switching control achieved by the calculation processing in FIG. 3. Meanwhile, no stepwise change occurs in the rear motor torque command value calculated by the slip angle difference-added control achieved by the calculation processing in FIG. 7. In the present embodiment, since the determination of whether the friction force is in the grip area or the non-grip area is made using whether or not the reference yaw rate $\gamma_T$ and the actual yaw rate y are equivalent (although a threshold value is set), the yaw rate difference $\Delta\gamma$ becomes (substantially) 0 at the time of transition between the non-grip area and the grip area and, as a result, the yaw rate-corresponding rear motor torque correction value also becomes (substantially) 0, which causes, at the time of each transition, only the slip angle-corresponding rear motor torque correction value to remain. Therefore, no stepwise change occurs in the rear motor torque command value calculated by the slip angle difference-added control. Since at the time of intervention by electronic control while the vehicle is traveling, the driver is more sensitive to stepwise control input, the braking/driving force control by the slip angle difference-added control is less likely to cause a sense of discomfort.

Although the vehicular braking/driving force control method and the vehicular braking/driving force control device according to the embodiment are described above, the present invention is not limited to the configuration described in the above-described embodiment, and various modification can be made within the scope of the present invention. For example, in the above-described embodiment, in the grip area, a slip angle that causes the vehicle position at the forward gaze position to coincide with a position on the turning trajectory is set as the target slip angle, and the front motor torque and the rear motor torque are corrected in such a way as to achieve the target slip angle. Instead of this configuration, the target slip angle may be set to an inward angle when the vehicle speed is in a low-speed range and may be set to an outward angle when the vehicle speed is in a high-speed range. That is, in a general vehicle, a slip angle that is actually generated in the vehicle is formed outward in the low-speed range and inward in the high-speed range, and the actual slip angle serves as deviation of the forward gaze position from the turning trajectory of the vehicle. Therefore, setting the target slip angle to an inward angle in the low-speed range and an outward angle in the high-speed range enables the vehicle position at the forward gaze position to be brought back to a position on the turning trajectory. In this case, when, for example, the target slip angle is set in such a manner that the lower the vehicle speed is, the larger the magnitude of inward target slip angle becomes and the higher the vehicle speed is, the larger the magnitude of outward target slip angle becomes, the positional displacement can be corrected more accurately. In addition, when the slip angle actually generated in the vehicle is known in advance, an equivalent effect can be achieved by setting the target slip angle in such a way that the slip angle decreases (in the absolute value).

In addition, although in the above-described embodiment, a vehicle that is capable of controlling the braking/-driving forces to the front wheel and the rear wheel is described, the braking/driving force control method and the braking/driving force control device of the present invention are also applicable to a vehicle that is capable of controlling only the braking/driving force to the front wheels or only the braking/driving force to the rear wheels. In addition, the braking/driving force control method and the braking/driving force control device of the present invention are likewise applicable to a vehicle that is capable of controlling the braking/driving force with respect to only the front wheels or only the rear wheels. Since the principle of the braking/driving force control is not different among such modes of embodiment, with regard to details of the control, it is only required to, for example, leave a description regarding controllable wheels and neglect a description regarding uncontrollable rear wheels or neglect a description regarding uncontrollable front wheels.

In addition, although in the above-described embodiment, the braking/driving forces to the front wheels and the rear wheels are controlled by the front wheel motor torque and the rear wheel motor torque (including powering operation and regenerative operation), respectively, the braking/driving force control method and the braking/driving force control device of the present invention are also applicable to a vehicle in which driving force of an engine is transmitted to the front wheels and/or the rear wheels and braking force to the front and rear wheels is adjusted by a braking device using fluid pressure (hydraulic pressure) or a motor. Since among the braking/driving forces, torque of the motors during the powering operation corresponds to the driving force and torque of the motors during the regenerative operation corresponds to the braking force, it is only required to control the driving force by the engine and control the braking force by the braking device.

As described above, a vehicular braking/driving force control device of the present embodiment determines whether a cornering force of a tire is in a grip area where the cornering force is proportional to input by a driver or in a non-grip area where the cornering force is not proportional to input by the driver. In the grip area, the vehicular braking/driving force control device calculates a target slip angle $\beta_T$ of the vehicle and controls braking/driving forces to front wheels 1FL and 1FR and/or rear wheels 1RL and 1RR to bring a current slip angle $\beta_C$ generated in the vehicle close to the target slip angle $\beta_T$. Meanwhile, in the non-grip area, the vehicular braking/driving force control device calculates a target yaw rate $\gamma_T$ of the vehicle and controls braking/driving forces to the front wheels 1FL and 1FR and/or the rear wheels 1RL and 1RR to bring an actual yaw rate $\gamma$ generated in the vehicle close to the target yaw rate $\gamma_T$. Because of this configuration, in the grip area, since the slip angle $\beta$ of the vehicle comes close to the target slip angle $\beta_T$, corrective steering can be reduced, and in the non-grip area, since the yaw rate $\gamma$ of the vehicle comes close to the target yaw rate $\gamma_T$, steering stability during turning can be improved.

In addition, in the non-grip area, the vehicular braking/driving force control device also calculates a target slip angle $\beta_T$ of the vehicle and calculates braking/driving forces to the front wheels 1FL and 1FR and/or the rear wheels 1RL and 1RR, the braking/driving forces bringing a current slip angle $\beta_C$ generated in the vehicle close to the target slip angle $\beta_T$. The vehicular braking/driving force control device adds the calculated braking/driving forces to braking/driving forces to the front wheels 1FL and 1FR and/or the rear wheels 1RL and 1RR, the braking/driving forces bringing an actual yaw rate $\gamma$ generated in the vehicle close to the target yaw rate $\gamma_T$, and controls braking/driving forces to the front wheels 1FL and 1FR and/or the rear wheels 1RL and 1RR. Because of this configuration, it becomes difficult for the braking/driving forces to the front wheels 1FL and 1FR and/or the rear wheels 1RL and 1RR to change in a stepwise manner at the time of transitions between the grip area and the non-grip area, which enables the sense of discomfort felt by the driver to be eliminated.

In addition, a target slip angle $\beta_T$ in the grip area is defined as an angle causing a forward gaze position, the forward gazing position being calculated from forward gaze time and traveling speed V of the vehicle, to coincide with a position on a turning trajectory, the turning trajectory being obtained from a yaw rate generated in the vehicle and the traveling speed V. This configuration enables corrective steering by the driver based on change in the slip angle generated in the actual vehicle to be eliminated in advance.

In addition, it is possible to rapidly correct or cause to subside undesirable steering characteristics of the vehicle by setting the target yaw rate in the non-grip area such that gain with respect to a front wheel turning angle is made larger and/or responsiveness with respect to the front wheel turning angle is made faster than the gain and/or the responsiveness in a reference yaw rate in the grip area.

Moreover, in the non-grip area, it becomes possible to cause the oversteer state to subside more quickly than the understeer state by determining whether or not a direction of a yaw rate $\gamma$ generated in the vehicle is same as a direction of the target yaw rate $\gamma_T$ and, when the directions are same, making gain of the target yaw rate $\gamma_T$ larger and, when the directions are different, making responsiveness of the target yaw rate $\gamma_T$ more rapid.

Further, in the non-grip area, by adjusting the target yaw rate $\gamma_T$ according to an acceleration/deceleration state of the vehicle, it becomes possible to more accurately correct the steering characteristics of the vehicle to the neutral steer state.

Furthermore, by controlling braking/driving forces to the front wheels and the rear wheels when a steering input is given to the vehicle from a driver and controlling braking/driving forces to only one of the front wheels and the rear wheels when the steering input is not given, advantageous effects, such as reduced power consumption and fuel consumption during straight travel, which does not require corrective steering or vehicle behavior improvement, can be achieved.

Reference Signs List

1FL, 1FR Front wheel
1RL, 1RR Rear wheel
2F Front (front wheel) motor
2R Rear (rear wheel) motor
5 Accelerator opening sensor
6 Brake pressing force sensor
7 Steering angle sensor
8 Yaw rate sensor
9 Travel characteristic selection switch
11 Controller
16 Wheel speed sensor

**Claims**

1.  A vehicular braking/driving force control method for controlling braking/driving force to a front wheel and/or a rear wheel of a vehicle, the vehicular braking/driving force control method comprising:

    determining whether a cornering force of a tire is in a grip area where the cornering force is proportional to input by a driver or in a non-grip area where the cornering force is not proportional to input by the driver;
    in the grip area, calculating a target slip angle of the vehicle and controlling braking/driving force to the front wheel and/or the rear wheel to bring a slip angle generated in the vehicle close to the target slip angle; and
    in the non-grip area, calculating a target yaw rate of the vehicle and controlling braking/driving force to the front wheel and/or the rear wheel to bring a yaw rate generated in the vehicle close to the target yaw rate.

2.  The vehicular braking/driving force control method according to claim 1, wherein in the non-grip area, the vehicular braking/driving force control method calculates a target slip angle of the vehicle, calculates a braking/driving force to the front wheel and/or the rear wheel, the braking/driving force bringing a slip angle generated in the vehicle close to the target slip angle, adds the calculated braking/driving force to braking/driving force to the front wheel and/or the rear wheel, the braking/driving force bringing a yaw rate generated in the vehicle close to the target yaw rate, and controls braking/driving force to the front wheel and/or the rear wheel.

3.  The vehicular braking/driving force control method according to claim 1, wherein a target slip angle in the grip area is an angle causing a forward gaze position, the forward gaze position being calculated from forward gaze time and traveling speed of the vehicle, to coincide with a position on a turning trajectory, the turning trajectory being obtained from a yaw rate generated in the vehicle and the traveling speed.

4.  The vehicular braking/driving force control method according to claim 1, wherein the target yaw rate in the non-grip area is set such that gain with respect to a front wheel turning angle is made larger and/or responsiveness with respect to the front wheel turning angle is made faster than the gain and/or the responsiveness in a reference yaw rate in the grip area.

5.  The vehicular braking/driving force control method according to claim 1, wherein in the non-grip area, the vehicular braking/driving force control method determines whether or not a direction of a yaw rate generated in the vehicle is same as a direction of the target yaw rate and, when the directions are same, makes gain of the target yaw rate larger and, when the directions are different, makes responsiveness of the target yaw rate more rapid.

6.  The vehicular braking/driving force control method according to claim 1, wherein in the non-grip area, the vehicular braking/driving force control method adjusts the target yaw rate according to an acceleration/deceleration state of the vehicle.

7.  The vehicular braking/driving force control method according to claim 1, wherein the vehicular braking/driving force control method controls braking/driving force to the front wheel and the rear wheel when a steering input is given to the vehicle from a driver and controls braking/driving force to only one of the front wheel and the rear wheel when the steering input is not given.

8.  A vehicular braking/driving force control device configured to control braking/driving force to a front wheel and/or a rear wheel of a vehicle, comprising:

    a motor for front wheel capable of adjusting braking/driving force to the front wheel according to an operating state;
    a motor for rear wheel capable of adjusting braking/driving force to the rear wheel according to an operating state; and
    a controller configured to: determine whether a cornering force of a tire is in a grip area where the cornering force is proportional to input by a driver or in a non-grip area where the cornering force is not proportional to input by the driver; in the grip area, calculate a target slip angle of the vehicle and control an operating state of the motor for front wheel and/or the motor for rear wheel to bring a slip angle generated in the vehicle close to the target slip angle; and in the non-grip area, calculate a target yaw rate of the vehicle and control an operating state of the motor for front wheel and/or the motor for rear wheel to bring a yaw rate generated in the vehicle close to the target yaw rate.

# FIG. 1

# FIG. 2

# FIG. 3

START

READING IN AND CALCULATION OF NECESSARY DATA — S1

GRIP AREA ? — S2

| REFERENCE YAW RATE |—| ACTUAL YAW RATE | ≦ THRESHOLD VALUE

Y

N

GRIP AREA MOTOR TORQUE CORRECTION VALUE CALCULATION — S3

NON-GRIP AREA MOTOR TORQUE CORRECTION VALUE CALCULATION — S4

RETURN

# FIG. 4

START

READ IN STEERING ANGLE $\theta$, WHEEL SPEED Vw, AND YAW RATE $\gamma$ — S11

CALCULATE TRAVELING SPEED V — S12

CALCULATE REFERENCE YAW RATE $\gamma_R$ — S13

RETURN

# FIG. 5

```
                    ( START )
                        │
                        ▼
S31 ─── CALCULATE TARGET SLIP ANGLE β_T
                        │
                        ▼
S32 ─── CALCULATE CURRENT SLIP ANGLE β_C
                        │
                        ▼
S33 ─── CALCULATE SLIP ANGLE DIFFERENCE Δβ
                        │
                        ▼
S34 ── IS CURRENT SLIP ANGLE β_C FORMED OUTWARD ──N──┐
        WITH RESPECT TO TARGET SLIP ANGLE β_T?       │
                        │Y                           │
                        ▼                            ▼
S35 ─                                    ─S37
```

| S35 CALCULATE FRONT WHEEL BRAKING / DRIVING FORCE DECREASE AMOUNT AND REAR WHEEL BRAKING / DRIVING FORCE INCREASE AMOUNT MATCHING SLIP ANGLE DIFFERENCE Δβ | S37 CALCULATE FRONT WHEEL BRAKING / DRIVING FORCE INCREASE AMOUNT AND REAR WHEEL BRAKING / DRIVING FORCE DECREASE AMOUNT MATCHING SLIP ANGLE DIFFERENCE Δβ |
|---|---|
| S36 CALCULATE GRIP AREA FRONT MOTOR TORQUE (DECREASE) CORRECTION AMOUNT AND GRIP AREA REAR MOTOR TORQUE (INCREASE) CORRECTION AMOUNT | S38 CALCULATE GRIP AREA FRONT MOTOR TORQUE (INCREASE) CORRECTION AMOUNT AND GRIP AREA REAR MOTOR TORQUE (DECREASE) CORRECTION AMOUNT |

```
                        │
                        ▼
                   ( RETURN )
```

# FIG. 6

$$\varepsilon = \sqrt{R^2 + L_G^2} - R$$

# FIG. 7

START

**S41**

|REFERENCE YAW RATE $\gamma_R$| > |ACTUAL YAW RATE $\gamma$|?

— N →

Y

**S42**

CALCULATE UNDERSTEER-CORRESPONDING TARGET YAW RATE $\gamma_{UST}$

**S43**

CALCULATE UNDERSTEER YAW RATE DIFFERENCE $\Delta\gamma_{US}$

**S44**

CALCULATE FRONT WHEEL BRAKING / DRIVING FORCE DECREASE AMOUNT AND REAR WHEEL BRAKING / DRIVING FORCE INCREASE AMOUNT MATCHING UNDERSTEER YAW RATE DIFFERENCE $\Delta\gamma_{US}$

**S45**

CALCULATE UNDERSTEER-CORRESPONDING NON-GRIP AREA FRONT MOTOR TORQUE (DECREASE) CORRECTION VALUE AND REAR MOTOR TORQUE (INCREASE) CORRECTION VALUE

**S46**

CALCULATE OVERSTEER-CORRESPONDING TARGET YAW RATE $\gamma_{OST}$

**S47**

CALCULATE OVERSTEER YAW RATE DIFFERENCE $\Delta\gamma_{OS}$

**S48**

CALCULATE FRONT WHEEL BRAKING / DRIVING FORCE INCREASE AMOUNT AND REAR WHEEL BRAKING / DRIVING FORCE DECREASE AMOUNT MATCHING OVERSTEER YAW RATE DIFFERENCE $\Delta\gamma_{OS}$

**S49**

CALCULATE OVERSTEER-CORRESPONDING NON-GRIP AREA FRONT MOTOR TORQUE (INCREASE) CORRECTION VALUE AND REAR MOTOR TORQUE (DECREASE) CORRECTION VALUE

RETURN

# FIG. 8

STEERING ANGLE AND YAW RATE

INCREASE IN c

STEERING ANGLE

TIME

INCREASE IN a AND b

REFERENCE YAW RATE

# FIG. 9

```
                    ┌─────────────┐
                    │    START    │
                    └──────┬──────┘
                           │                    S0
          N     ┌──────────▼──────────────┐
  ┌─────────────│  STEERING ANGLE θ ≠ 0   │
  │             └──────────┬──────────────┘
  │                        │ Y              S1
  │             ┌──────────▼──────────────┐
  │             │  READING IN AND CALCULATION │
  │             │    OF NECESSARY DATA     │
  │             └──────────┬──────────────┘
  │   S7                   │              S3
┌─▼──────────────────┐  ┌──▼───────────────────────┐
│     (TOTAL)        │  │  GRIP AREA MOTOR TORQUE   │
│ FRONT MOTOR TORQUE │  │ CORRECTION VALUE CALCULATION │
│ CORRECTION VALUE=0 │  └──────────┬───────────────┘
│     (TOTAL)        │             │            S2'
│ REAR MOTOR TORQUE  │  ┌──────────▼──────────────┐   N
│ CORRECTION VALUE=0 │  │     NON-GRIP AREA?      │────────┐
└────────┬───────────┘  └──────────┬──────────────┘        │
         │                         │ Y                      │
         │  BOTH TRAVELING SPEED AND                        │
         │     STEERING ANGLE ARE                           │
         │  THRESHOLD VALUES OR MORE                 S6      │
         │   S4  ┌──────────▼──────────┐  ┌──────────▼──────────┐
         │       │  NON-GRIP AREA MOTOR │  │   NON-GRIP AREA     │
         │       │ TORQUE CORRECTION VALUE │ │ FRONT MOTOR TORQUE │
         │       │     CALCULATION      │  │ CORRECTION VALUE=0  │
         │       └──────────┬──────────┘  │   NON-GRIP AREA     │
         │                  │             │ REAR MOTOR TORQUE   │
         │                  │             │ CORRECTION VALUE=0  │
         │                  │             └──────────┬──────────┘
         │                  │◄───────────────────────┘
         │  S5  ┌───────────▼──────────┐
         │      │  TOTAL MOTOR TORQUE  │
         │      │ CORRECTION VALUE CALCULATION │
         │      └───────────┬──────────┘
         └──────────────────┤
                            │
                    ┌───────▼──────┐
                    │    RETURN    │
                    └──────────────┘
```

# FIG. 10

# FIG. 11

**EP 4 744 939 A1**

## INTERNATIONAL SEARCH REPORT

| International application No. |
|---|
| **PCT/IB2023/000581** |

| A. | CLASSIFICATION OF SUBJECT MATTER |
|---|---|

***B60L 9/18***(2006.01)i; ***B60L 15/20***(2006.01)i
FI:   B60L9/18 P; B60L15/20 S

According to International Patent Classification (IPC) or to both national classification and IPC

| B. | FIELDS SEARCHED |
|---|---|

Minimum documentation searched (classification system followed by classification symbols)

B60L9/18; B60L15/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2002-173012 A (TOYOTA JIDOSHA KABUSHIKI KAISHA) 18 June 2002 (2002-06-18) paragraphs [0006]-[0007], [0014], [0034]-[0059], fig. 1-3 | 1-2, 6, 8 |
| A | | 3-5, 7 |
| Y | WO 2006/013645 A1 (HITACHI, LTD.) 09 February 2006 (2006-02-09) claims 3, 7, description, page 2, lines 22-25, page 4 lines 2-12, page 5, lines 16-23, fig. 1-9 | 1-2, 6, 8 |
| A | | 3-5, 7 |
| A | JP 2005-254861 A (DENSO CORPORATION) 22 September 2005 (2005-09-22) entire text, all drawings | 3-5, 7 |
| A | JP 2002-316546 A (FUJI HEAVY INDUSTRIES LTD.) 29 October 2002 (2002-10-29) paragraphs [0053]-[0135], fig. 1-7 | 3-5, 7 |
| A | JP 2012-96568 A (AISIN SEIKI KABUSHIKI KAISHA) 24 May 2012 (2012-05-24) paragraphs [0081]-[0092], fig. 13-17 | 3-5, 7 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

### INTERNATIONAL SEARCH REPORT
**Information on patent family members**

International application No.

**PCT/IB2023/000581**

| Patent document cited in search report | | | Publication date (day/month/year) | Patent family member(s) | | | Publication date (day/month/year) |
|---|---|---|---|---|---|---|---|
| JP | 2002-173012 | A | 18 June 2002 | (Family: none) | | | |
| WO | 2006/013645 | A1 | 09 February 2006 | (Family: none) | | | |
| JP | 2005-254861 | A | 22 September 2005 | US entire text, all drawings DE FR | 2005/0201593 102005009814 2867567 | A1 A1 A | |
| JP | 2002-316546 | A | 29 October 2002 | US paragraphs [0027]-[0138], fig. 1-7 EP | 2002/0153770 1256499 | A1 A2 | |
| JP | 2012-96568 | A | 24 May 2012 | US paragraphs [0095]-[0106], fig. 13-17 DE CN | 2012/0109461 102011085403 102556065 | A1 A1 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007302115 A